Europäisches Patentamt

European Patent Office

Office européen des brevets

(19)

(11) **EP 1 657 872 A2**

(12) **EUROPEAN PATENT APPLICATION**

(43) Date of publication:
**17.05.2006 Bulletin 2006/20**

(51) Int Cl.:
*H04L 27/26* (2006.01)    *H04Q 7/00* (2006.01)

(21) Application number: **05024412.8**

(22) Date of filing: **09.11.2005**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **11.11.2004   KR 2004091941**

(71) Applicant: **Samsung Electronics Co., Ltd.
Suwon-si, Gyeonggi-Do (KR)**

(72) Inventors:
• **Song, Seong-Wook
Yeongtong-gu
Suwon-si
Gyeonggi-do (KR)**

• **Gu, Young-Mo
Yeongtong-gu
Suwon-si
Gyeonggi-do (KR)**
• **Kim, Min-Goo
Yeongtong-gu
Suwon-si
Gyeonggi-do (KR)**

(74) Representative: **Lang, Johannes
Bardehle Pagenberg Dost Altenburg Geissler,
Postfach 86 06 20
81633 München (DE)**

(54) **Apparatus and method for transmitting a preamble and searching a cell in an OFDMA system**

(57)    An apparatus and method for generating a preamble and searching a cell using the generated preamble in an orthogonal frequency division multiple access (OFDMA) system. Q cyclic shift values and P pseudorandom noise (PN) codes are used to distinguish N cells. One of the P PN codes is cyclically shifted according to one of the Q cyclic shift values and therefore a preamble is generated. Because a relatively small number of PN codes are used, the memory capacity of a mobile terminal for storing the PN codes is saved and a cell search error is reduced.

FIG.5

**Description**

**BACKGROUND OF THE INVENTION**

Field of the Invention

The present invention generally relates to an orthogonal frequency division multiple access (OFDMA) system. More particularly, the present invention relates to an apparatus and method for searching a cell through a preamble.

Description of the Related Art

Mobile communication system has been developing into a fourth-generation (4G) mobile communication system subsequent to a first-generation (1G) analog system, a second-generation (2G) digital system, and a third-generation (3G) international mobile telecommunications-2000 (IMT-2000) system for providing a high-speed multimedia service. The 4G mobile communication system aims at supporting a high data transmission rate for high-speed data transmission of 100 Mbps or more. This 4G mobile communication system compensates for multipath attenuation in a wireless channel environment in which data is transmitted through a multipath and ensures burst packet data that may be suddenly increased according to a packet service.

An orthogonal frequency division multiple access (OFDMA) system is emerging as a candidate of the prominent wireless transmission technology capable of satisfying characteristics required for 4G mobile communications. The OFDMA system is a type of multicarrier transmission/modulation (MCM) system using multiple subcarriers, and generates parallel data corresponding to the number of used subcarriers from input data to transmit the data using carriers.

The OFDMA system can effectively distribute resources and increase transmission efficiency by differently allocating the number of subcarriers according to a transmission rate requested by a user. That is, because the OFDMA system is useful when an increased number of subcarriers are used (that is, a fast Fourier transform (FFT) size is large), time delay spread can be efficiently applied to a wireless communication system with a cell of a relative wide area.

To distinguish each base station (BS) in multicell and multisector environments, different pseudo-random noise (PN) codes are allocated to BSs. Each BS serving as a transmitter generates a preamble using an allocated PN code and transmits the generated preamble. A terminal serving as a receiver detects a preamble to select a target BS for communication or determine if a handoff is required. The preamble is placed at the head of a data frame and is used for a cell search, synchronization, and so on.

FIGS. 1A to 1C illustrate a structure of the conventional preamble used for OFDMA.

In FIG. 1A, a PN code is generated using a pseudo random binary sequence (PRBS) generator. The generated PN code is inserted into an orthogonal frequency division multiplexing (OFDM) symbol, such that a preamble is generated. The BS generates the preamble using one allocated PN code among N PN codes.

In FIG. 1B, a PN code in which a peak-to-average ratio (PAR) is relatively low is inserted into an OFDM symbol, such that a preamble is generated. That is, the BS generates a preamble using a PN code with a relatively low PAR among N PN codes.

In FIG. 1C, two OFDM symbols generated as illustrated in FIG. 1A or 1B are used for a preamble. A predetermined selected PN code is allocated to the first OFDM symbol and the predetermined selected PN code or a predetermined different PN code is allocated to the second OFDM symbol, such that multipath interference is compensated for.

FIG. 2 is a block diagram illustrating a structure of a transmitter in a conventional OFDMA system.

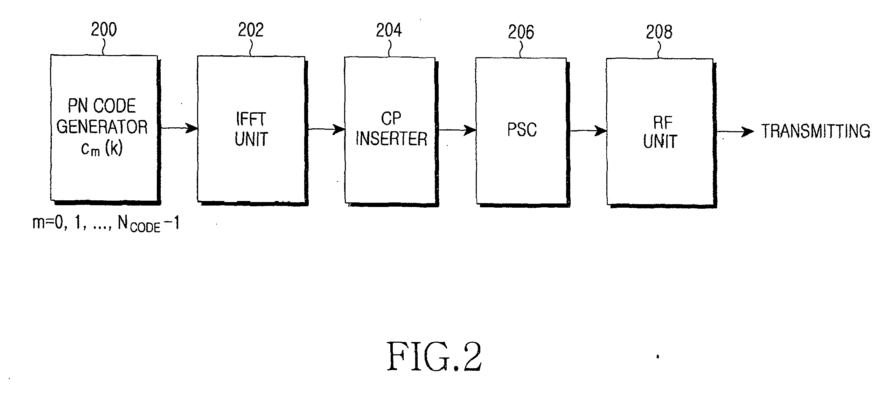

Referring to FIG. 2, a PN code generator 200 stores $N_{CODE}$ PN codes corresponding to the number of subcarriers, and generates one PN code allocated as a preamble among the PN codes. An inverse fast Fourier transform (IFFT) unit 202 OFDM-modulates the PN code into $N$ OFDM samples and then outputs the N OFDM samples. A cyclic prefix (CP) inserter 208 copies the last G OFDM samples among the N OFDM samples, inserts the copied OFDM samples serving as a CP for preventing inter-symbol interference (ISI) into the head end of the OFDM samples, and outputs a result of the insertion. A set of the OFDM samples into which the CP has been inserted is referred to as an OFDM symbol. A parallel-to-serial converter (PSC) 206 converts parallel data of the OFDM symbol in a serial fashion and then outputs the OFDM symbol. A radio frequency (RF) unit 208 converts the OFDM symbol to an OFDM signal of an RF band consisting of N subcarriers and then transmits the OFDM signal.

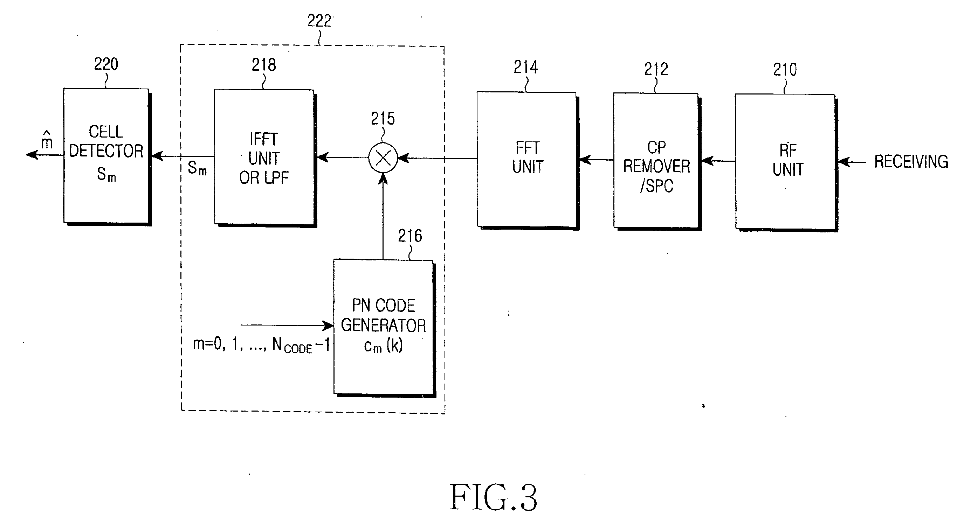

FIG. 3 is a block diagram illustrating a structure of a receiver in the conventional OFDMA system.

Referring to FIG. 3, an RF unit 210 receives an OFDM signal transmitted from the transmitter. A CP remover/ serial-to-parallel converter (SPC) 212 detects an OFDM symbol from which a CP has been removed from the OFDM signal and then outputs N OFDM samples in the parallel fashion. A fast Fourier transform (FFT) processor 214 receives N -sample data input in the parallel fashion, performs an FFT operation, that is an OFDM demodulation operation, on the N -sample data, and outputs a time domain signal. The time domain signal is output to a preamble detector 222 that is configured by a multiplier 215, a PN code generator 216, and an IFFT unit or low pass filer (LPF) 218.

The multiplier 215 multiplies the time domain signal by N PN codes output from the PN code generator 216 and then outputs multiplied signals. The IFFT unit or LPF 218 receives the multiplied signals output from the multiplier 215 and then identifies their energies. That is, the IFFT unit or LPF 218 identifies the energies of the multiplied signals and then selects a PN code with the energy of a peak value, that is, a matched PN code. A cell detector220 sets a cell mapped to the selected PN code to a cell most suitable for communicating with the mobile terminal.

On the basis of the current mobile communication standard, BSs configured in 127 cells and 8 sectors must be able to be distinguished by preambles. That is, the mobile terminal must perform a cell search for 1,016 PN codes. The mobile terminal identifies the energy of each of the 1,016 PN codes and then selects a BS with one PN code of a peak value in a frequency domain.

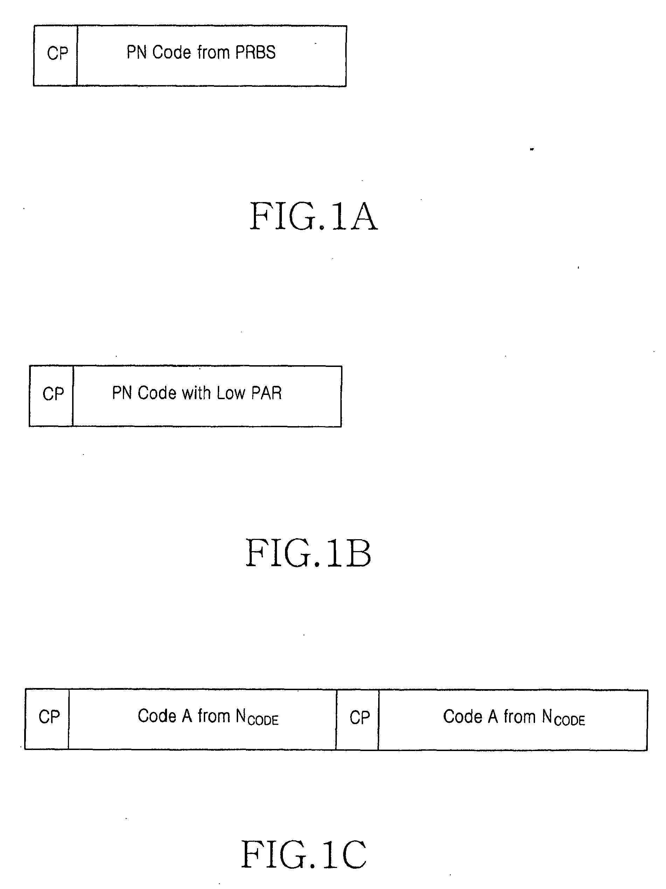

However, there is a problem in that a large amount of computations is required because the mobile terminal must perform the cell search for the 1,016 PN codes at the time of a handover in the OFDMA system. Conventionally, the mobile terminal stores a total of PN codes in a memory, and performs the cell search for a received OFDM signal. Thus, there is a problem in that hardware of the mobile terminal is increased due to use of the memory for storing the 1,016 PN codes. Moreover, there is a problem in that the number of cells or sectors capable of being expressed by a preamble is limited when the preamble is configured by the method of FIG. 1C.

## SUMMARY OF THE INVENTION

The present invention provides an apparatus and method that consider a cyclic shift in an orthogonal frequency division multiple access (OFDMA) system and employ a relatively small number of pseudo-random noise (PN) codes for distinguishing base stations (BSs).

The present invention provides an apparatus and method that generate a preamble in a combination of $Q$ cyclic shift values and $P$ pseudo-random noise (PN) codes.

The present invention provides an apparatus and method that detect a preamble generated in a combination of $Q$ cyclic shift values and $P$ pseudo-random noise (PN) codes.

In accordance with an exemplary embodiment of the present invention, there is provided a method for transmitting a preamble in an orthogonal frequency division multiple access (OFDMA) system using N subcarriers, comprising generating an allocated pseudo-random noise (PN) code of $P_{CODE}$ PN codes from each cell such that all $N_{CODE}$ cells are identified, where $P_{CODE}$ is less than $N_{CODE}$, transforming the PN code into $N$ orthogonal frequency division multiplexing (OFDM) samples according to $N$-point inverse fast Fourier transform (IFFT), cyclically shifting the OFDM samples by an allocated value of $Q_{CODE}$ cyclic shift values, where $N_{CODE}$ is $P_{CODE} * Q_{CODE}$, inserting a cyclic prefix (CP) for preventing inter-symbol interference into a head end of the cyclically shifted OFDM samples, and generating a first OFDM symbol to be used for a preamble, and, transmitting the first OFDM symbol at a beginning of a data frame through a radio frequency (RF) band.

In accordance with another exemplary embodiment of the present invention, there is provided an apparatus for transmitting a preamble in an orthogonal frequency division multiple access (OFDMA) system using N "subcarriers, comprising a pseudo-random noise (PN) code generator for generating an allocated PN code of $P_{CODE}$ PN codes from each cell such that all $N_{CODE}$ cells are identified, where $P_{CODE}$ is less than $N_{CODE}$, an inverse fast Fourier transform (IFFT) unit for transforming the PN code into N orthogonal frequency division multiplexing (OFDM) samples according to $N$-point IFFT, a cyclic shifter for cyclically shifting the OFDM samples by an allocated value of $Q_{CODE}$ cyclic shift values, where $N_{CODE}$ is $P_{CODE} * Q_{CODE}$, a cyclic prefix (CP) inserter for inserting a CP for preventing inter-symbol interference into a head end of the cyclically shifted OFDM samples, and generating a first OFDM symbol to be used for a preamble, and a radio frequency (RF) unit for transmitting the first OFDM symbol at a beginning of a data frame through an RF band.

In accordance with another embodiment of the present invention, there is provided a method for receiving a preamble in an orthogonal frequency division multiple access (OFDMA) system using $N$ subcarriers, comprising receiving an orthogonal frequency division multiplexing (OFDM) signal comprising at least one OFDM symbol used for a preamble through the subcarriers, removing a cyclic prefix (CP) for preventing inter-symbol interference from the received OFDM signal, and detecting $N$ OFDM samples, transforming the $N$ OFDM samples into a frequency domain signal according to $N$-point fast Fourier transform (FFT), multiplying the frequency domain signal by $P_{CODE}$ pseudo-random noise (PN) codes for identifying all $N_{CODE}$ cells, determining a time domain in which energy of each of multiplied signals is concentrated, and detecting a cyclic shift value of a PN code applied to each OFDM symbol, wherein the cyclic shift value is one of $Q_{CODE}$ cyclic shift values and $N_{CODE}$ is $P_{CODE} * Q_{CODE}$; and searching a cell mapped to the detected cyclic shift value of the PN code.

In accordance yet another embodiment of the present invention, there is provided an apparatus for receiving a preamble in an orthogonal frequency division multiple access (OFDMA) system using $N$ subcarriers, comprising a radio frequency (RF) unit for receiving an orthogonal frequency division multiplexing (OFDM) signal comprising at least one OFDM symbol used for a preamble through the subcarriers, a cyclic prefix (CP) remover for removing a CP for preventing inter-symbol interference from the received OFDM signal, and detecting $N$ OFDM samples, a fast Fourier transform (FFT) processor for transforming the $N$ OFDM samples into a frequency domain signal according to $N$-point FFT, a preamble detector for multiplying the frequency domain signal by $P_{CODE}$ pseudo-random noise (PN) codes for identifying all $N_{CODE}$ cells, determining a time domain in which energy of each of multiplied signals is concentrated, and detecting a cyclic shift value of a PN code applied to each OFDM symbol, wherein the cyclic shift value is one of $Q_{CODE}$ cyclic shift values and $N_{CODE}$ is $P_{CODE} * Q_{CODE}$, and a cell detector for searching a cell mapped to the detected cyclic shift value of the PN code.

**BRIEF DESCRIPTION OF THE DRAWINGS**

The above and other features and advantages of the exemplary embodiments of the present invention will be more clearly understood from the following detailed description taken in conjunction with the accompanying drawings, in which like reference numerals will be understood to refer to like parts, components and structures, where:

FIGS. 1A to 1C illustrate a structure of a conventional preamble;
FIG. 2 is a block diagram illustrating a structure of a conventional transmitter for generating a preamble;
FIG. 3 is a block diagram illustrating a structure of a conventional receiver for performing a cell search;

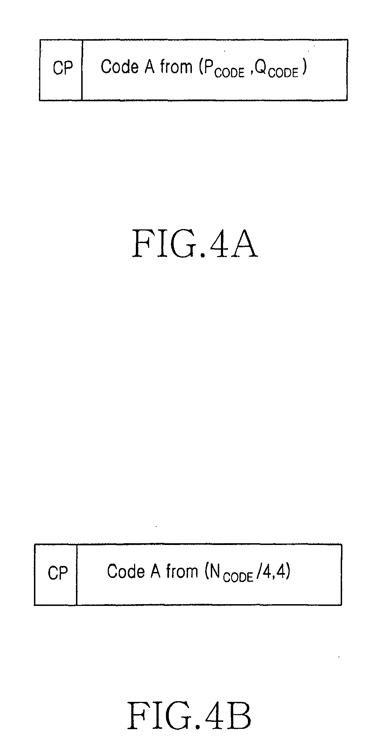

FIGS. 4A to 4D illustrate examples of generating a preamble in accordance with an exemplary embodiment of the present invention;

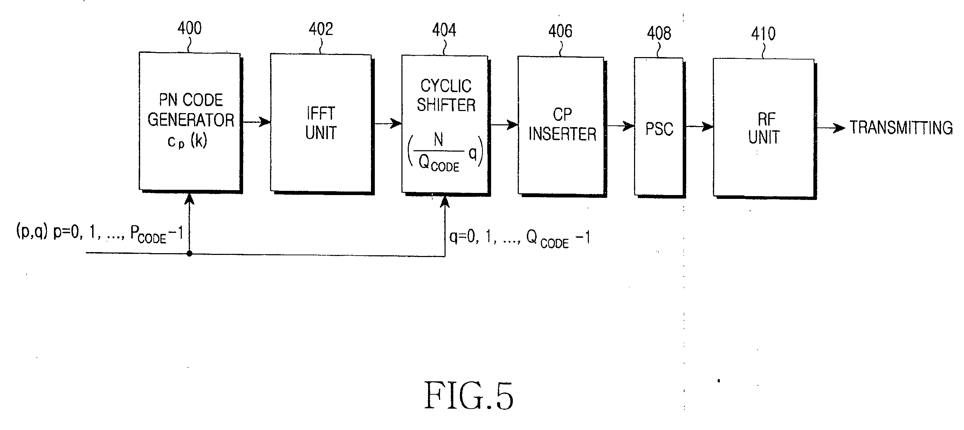

FIG. 5 is a block diagram illustrating a structure of a transmitter for generating a preamble in accordance with an exemplary embodiment of the present invention;

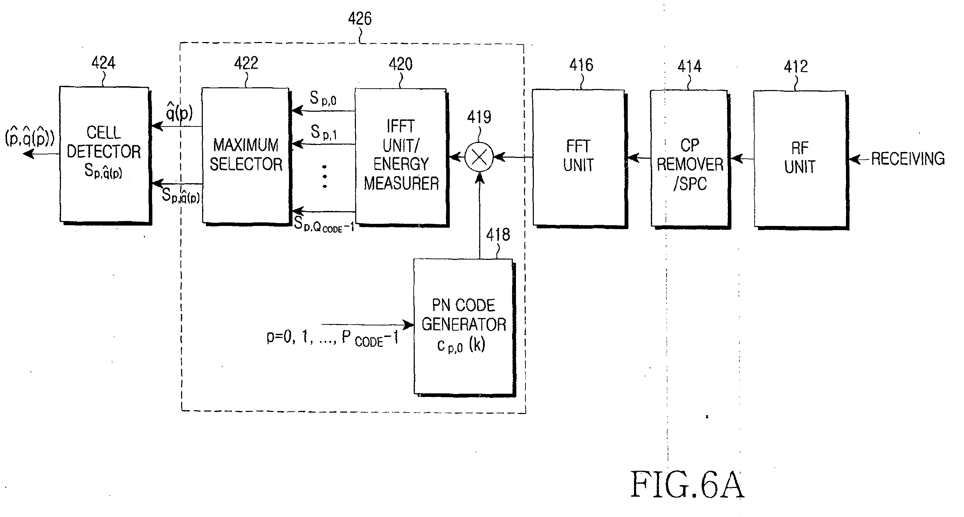

FIG. 6A is a block diagram illustrating a structure of a receiver for performing a cell search in accordance with another exemplary embodiment of the present invention;

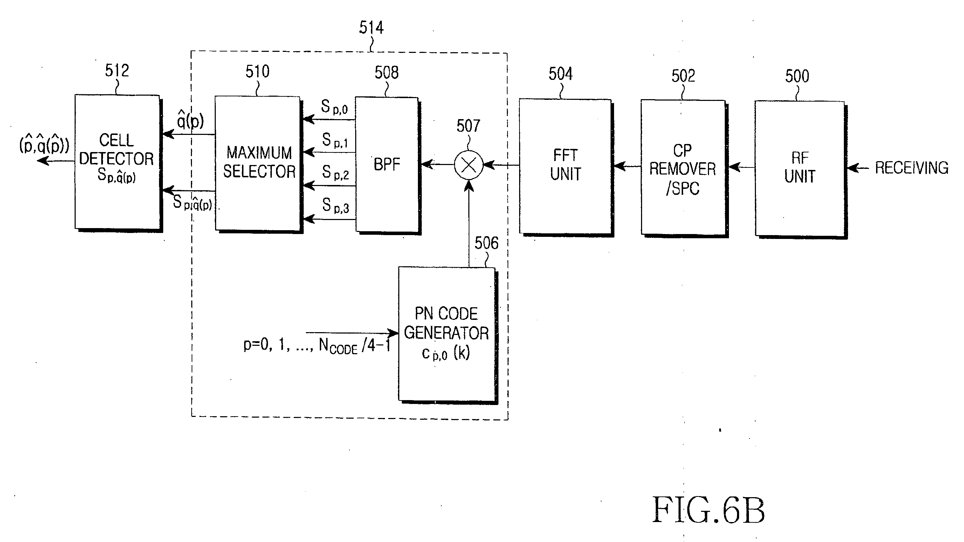

FIG. 6B is a block diagram illustrating a structure of a receiver for performing a cell search in accordance with another exemplary embodiment of the present invention;

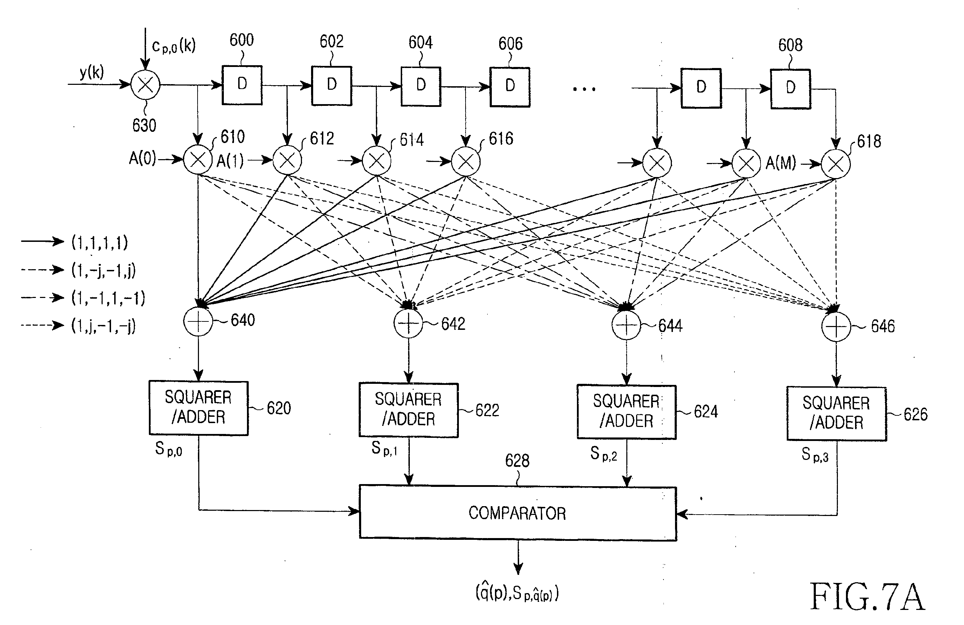

FIG. 7A is a block diagram illustrating an example of a preamble detector in accordance with an exemplary embodiment of the present invention;

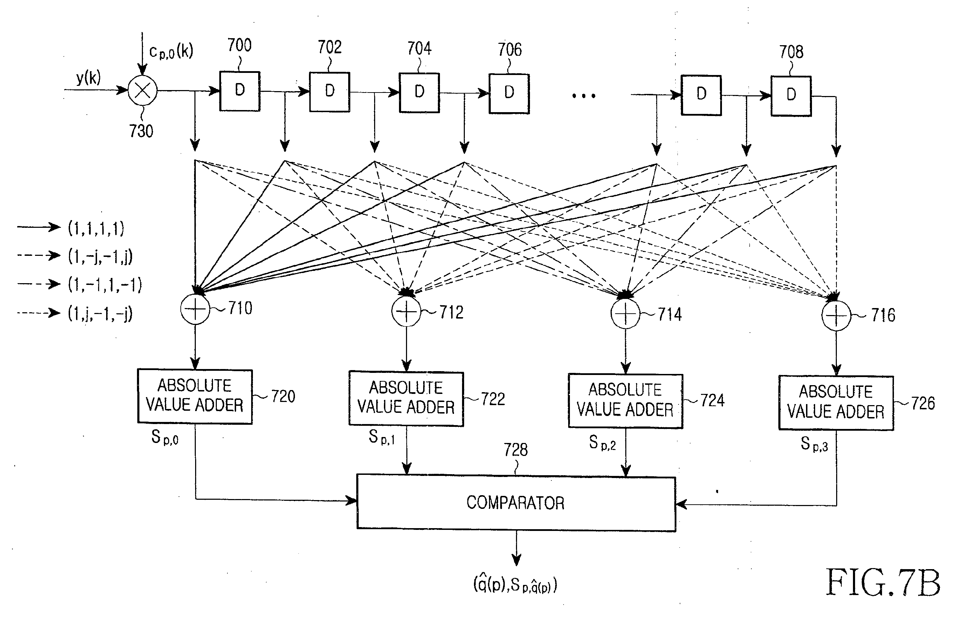

FIG. 7B is a block diagram illustrating another example of a preamble detector in accordance with an exemplary embodiment of the present invention; and

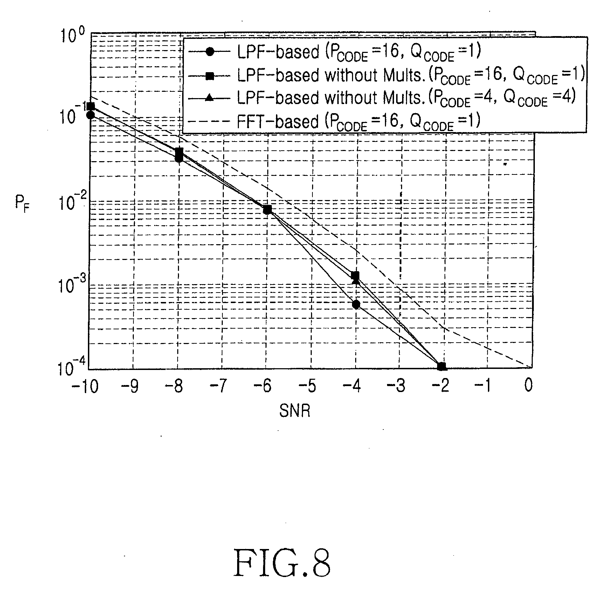

FIG. 8 is a graph illustrating the performance of detecting a generated preamble in accordance with an exemplary embodiment of the present invention.

**DETAILED DESCRIPTION OF EXEMPLARY EMBODIMENTS**

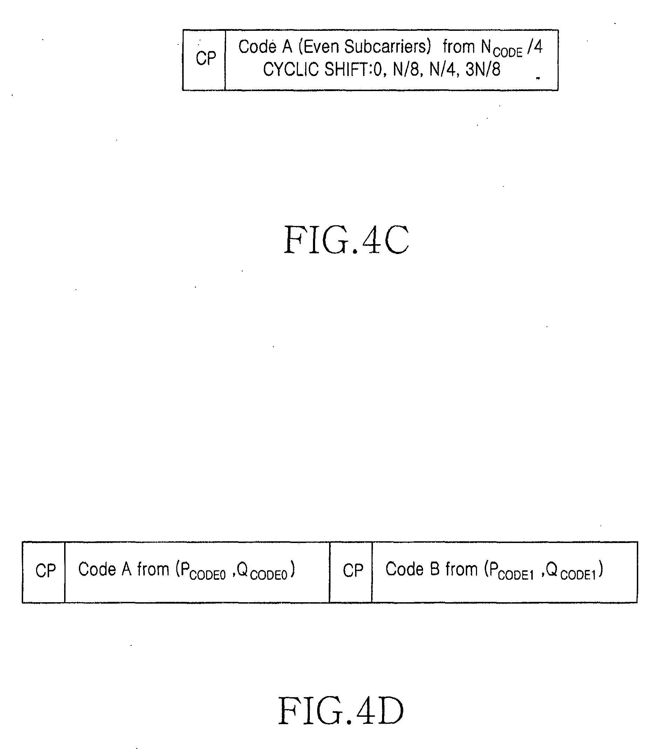

Certain exemplary embodiments of the present invention will be described in detail herein below with reference to the accompanying drawings. In the following description, detailed descriptions of certain functions and configurations incorporated herein that are well known to those skilled in the art are omitted for clarity and conciseness.
According to an exemplary implementation of the present invention, a preamble is generated using a relatively small number of pseudo-random noise (PN) codes in an orthogonal frequency division multiple access (OFDMA) system and an associated cell is searched using the generated preamble.
Conventionally, an orthogonal frequency division multiplexing (OFDM)-based system allocates subcarrier-by-subcarrier signals in a frequency domain. Each base station (BS) configures a preamble for a cell search with a unique pattern in the frequency domain, and transmits the preamble at the beginning of a data frame. A mobile terminal identifies a received signal on a subcarrier-by-subcarrier basis and performs the cell search. In the specification, the BS is configured in a specific sector of a specific cell and the specific sector of the specific cell is searched in the cell search. The BS transmits a preamble with a unique pattern using a PN code to distinguish an associated cell. Upon receiving signals transmitted from a plurality of BSs, the mobile terminal performs the cell search using PN codes.
Although the total number of cells is constant in the system, the number of cell searches or cell search complexity significantly differs according to an exemplary method of designing a PN code or preamble. In accordance with an exemplary embodiment of the present invention, a mobile communication system may significantly reduce the number of PN codes used for the cell search, thereby reducing an amount of computation and use of hardware for the cell search. According to an exemplary embodiment of the present invention $N_{CODE}$ PN codes corresponding to the number of cells to be distinguished are not used, instead, $P_{CODE}$ PN codes less than $N_{CODE}$ are used. According to such an exemplary implementation, the $P_{CODE}$ PN codes are cyclically shifted by $Q_{CODE}$ cyclic shift values, and each cyclic shift value indicates the number of bits by which a PN code of a certain length is cyclically shifted.
FIGS. 4A to 4D illustrate examples of generating a preamble in accordance with an exemplary embodiment of the present invention.
Here, FIG. 4A illustrates a structure of a preamble designed using a multicode and a cyclic shift. FIG. 4B illustrates a structure of a preamble designed using a multicode and a cyclic shift of a multiple of N/4. FIG. 4C illustrates a structure of a preamble designed using a cyclic shift of a multiple of N/8 when an even subcarrier is used. At last, FIG. 4D illustrates a structure of a preamble using the first two OFDM symbols of a data frame in which identical codes are not allocated but individual PN codes and individual cyclic shift values are allocated.

Assuming that a PN code applied to the $i$—$th$ BS among $N_{CODE}$ BSs is denoted by $c_i(k)$, a signal $y(k)$ received from the $i$—$th$ BS and transformed by a fast Fourier transform (FFT) processor is defined by Equation (1).

$$y(k) = H(k)c_i(k) + w(k) \quad \text{for} \quad k = 0,1,...,N-1 \qquad \text{Equation (1)}$$

In Equation (1), $k$ is a subcarrier index indicating $N$ subcarriers; $H(k)$ is a channel impulse response in a frequency domain, and $w(k)$ is additive noise. $H(k)$ is obtained by performing discrete Fourier transform (DFT) on a channel response $h[n]$ of a specific length $L$ in a time domain.

When a multiplication operation is performed using a PN code $c_0(k)$ applied for the cell search in Equation (1), Equation (2) is given as follows.

$$\hat{y}_0(k) = c_0^*(k)y(k) = H(k)c_0^*(k)c_i(k) + c_0^*(k)w(k) \qquad \text{for} \qquad k = 0,1,...,N-1 \qquad \text{and}$$

$$i = 0,1,2,...,N_{CODE}-1 \qquad \text{Equation (2)}$$

Because $|c_0(k)|^2=1$ according to characteristics of PN codes, Equation (2) is rewritten as Equation (3) if $i = 0$.

$$\hat{y}_0(k) = |c_0(k)|^2 H(k) + c_0^*(k)w(k) = H(k) + c_0^*(k)w(k) \qquad \text{Equation (3)}$$

When $N$-point inverse discrete Fourier transform (IDFT) is performed by an inverse fast Fourier transform (IFFT) unit for Equation (3), Equation (4) is given as follows.

$$\tilde{y}_0[n] = IDFT[\hat{y}_0(k)] = h[n] + \tilde{w}[n] \quad \text{for} \quad n = 0,1,...,N-1 \qquad \text{Equation (4)}$$

In Equation (4), $\tilde{w}[n]$ is regarded as white Gaussian noise corresponding to $E[|\tilde{w}[n]|^2] = N_0$.

Conventionally, the OFDMA system is designed such that a condition of $L<<N$ is satisfied for cancellation of interference between adjacent OFDM symbols. Accordingly, when an applied PN code is matched to a preamble PN code in the mobile terminal, energy $|\tilde{y}_0[n]|^2$ is concentrated in a time domain of $n = 0,1,2,..., N$ -1. However, when the applied PN code is mismatched to the preamble PN code, the energy is uniformly distributed throughout a total time domain.

Therefore, the IFFT unit measures the energy distribution of the time domain in which IFFT has been performed on each PN code, and selects a PN code with the maximum energy in the time domain of $n = 0,1,2,..., N$—$1$ from PN codes of $i = 0,1,2,..., N_{CODE}$ -1.

On the other hand, if the BS uses $c_l(k) = e^{j\frac{2\pi}{N}ldk}c_0(k)$, i.e., $c_l[n] = c_0[(n+d)_N]$, for a preamble in accordance with a exemplary embodiment of the present invention, a code $c_1(k)$ is obtained by cyclically shifting $c_0(k)$ by $d$ in the time domain. When the mobile terminal multiplies a received signal of the frequency domain by $c_0(k)$ for the cell search, a signal as shown in Equation (5) is obtained.

$$\hat{y}_0(k) = H(k)c_0^*(k)c_l(k) + c_l^*(k)w(k) = e^{-j\frac{2\pi}{N}ldk}H(k) + c_0^*(k)w(k) \quad \text{Equation (5)}$$

The signal is OFDM-modulated by the IFFT unit as shown in Equation (6).

$$\tilde{y}_0[n] = IDFT[\hat{y}_0(k)] = h[(n-ld)_N] + \tilde{w}[n] \qquad \text{Equation (6)}$$

When a PN code is matched in Equation (6), energy $|\tilde{y}_0[n]|^2$ of the signal is concentrated in a time domain of $n = ld, id + 1, Id + 2,..., Id + L - 1$ . Accordingly, when a cyclic shift preamble is used, a time domain in which the energy after IFFT is mainly distributed is detected, such that the cell search is possible. According to an exemplary implementation, when the modulation in the frequency domain, that is, the cyclic shift in the time domain, is used, the cell search is performed while considering the energy distribution of $|\tilde{y}_0[n]|^2$ .

According to an exemplary implementation, a condition of $d > L$ must be satisfied such that energy intervals between codes do not overlap. Because the number of available codes is limited to $l < \dfrac{N}{L}$ , a sufficient number of codes are not created.

Now, the preambles structures of FIGS. 4A to 4D will be described under consideration of the above-described energy characteristics.

A preamble as illustrated in FIG. 4A is designed using Equation (7).

$$c_{p,q}(k) = e^{j\frac{2\pi}{N}(\frac{N}{Q_{CODE}})qk}c_p(k) \quad \text{for} \quad k = 0,1,...,N-1 \ , \quad p = 0,1,2,...,P_{CODE}-1 \ , \quad \text{and}$$

$$q = 0,1,2,...,Q_{CODE}-1 \qquad \text{Equation (7)}$$

That is, all cells are distinguished using $Q_{CODE}$ cyclic shift values for $P_{CODE}$ different PN codes. That is, $(P_{CODE}$ number of PN codes) x $(Q_{CODE}$ number of cyclic shift values) = $(N_{CODE}$ number of cells).

For example, the total number of cells to be distinguished is $N_{CODE}$, and $N_{CODE}$ = 1,024. According to an exemplary implementation, the BS generates a preamble using one of 128 PN codes (where $P_{CODE}$ = 128) and one of 8 cyclic shift values (where $Q_{CODE}$ = 8). The mobile terminal performs the cell search by identifying a matched PN code from the 128 PN codes, identifying a time domain in which the energy of a signal matched to the PN code is distributed, and selecting one of the 8 cyclic shift values.

The mobile terminal stores only the 128 PN codes and performs the cell search based on the 128 PN codes, thereby obtaining a gain of a computation amount equal to 1/8 of the conventional computation amount requiring 1,024 PN codes.

A preamble is designed using $Q_{CODE}$ = 4 as illustrated in FIG. 4B. The preamble uses a cyclic shift value of a multiple of $N / 4$ .

As described above, IFFT is required to measure the energy distribution of a time domain when a cyclic shift is used. In this case, the number of complex multiplications required for the IFFT becomes $P_{CODE} N_{CODE} \log(N_{CODE})$. When $N_{CODE}$ and $P_{CODE}$ are increased, cell search complexity is increased.

When a fixed-point arithmetic operation is implemented, the number of bits required for satisfying a requested signal-to-quantization noise ratio (SQNR) is increased in proportion to $N_{CODE}$. For example, when an IFFT size is 1,024, 13 bits are required to satisfy an SQNR of 40 *dB.* Accordingly, complexity in actual hardware implementation may be increased.

When $Q_{CODE}$ = 4, Equation (7) can be simplified to Equation (8) using a LPF in which parallel finite impulse response (FIR) filters of $M << N$ taps are implemented, instead of IFFT.

$$c_{p,q}(k) = e^{j\frac{\pi}{2}qk} c_p(k) \qquad \text{for} \qquad k = 0,1,...,N-1 \quad , \quad p = 0,1,2,...,N_{CODE}/4-1 \quad , \quad \text{and}$$

$$q = 0,1,2,...,3 \qquad\qquad\qquad\qquad\qquad\qquad\qquad\qquad\qquad \text{Equation (8)}$$

Equation (8) is changed to Equation (9) by IDFT.

$$\tilde{y}_p[n] = IDFT[\hat{y}_p(k)] = h[(n-qN/4)_N] + \tilde{w}[n] \qquad \text{Equation (9)}$$

When a PN code is matched, the energy is concentrated in a time interval increased by $L$ from the cyclic shift values of 0, $N/4$, $N/2$ and $3N/4$. When a cyclic shift value is 0, the energy distribution is measured by measuring the output energy of an LPF (regarded as a bandpass filter (BPF) based on a pass band based on the cyclic shift value of 0) without use of IFFT. According to an exemplary implementation, the energy distribution is measured by measuring output energies of BPFs based on pass bands based on the cyclic shift values of $N/4$, $N/2$ and $3N/4$. Accordingly, the energy distribution of a signal matched to the PN code can be approximately measured. However, when a PN code is mismatched, the energy of the mismatched signal is uniformly distributed throughout a total time domain. According to an exemplary implementation, the output energy of each BPF is low as compared with that of the matched PN code.

When the four BPFs are independently implemented, the amount of computation and hardware complexity are increased. When cyclic shift values of multiples of $N/4$, i.e., 0, $N/4$, $N/2$ and $3N/4$ are used, four bandpass-filtered signals can be obtained through one LPF, such that the mobile terminal can perform the cell search using a small amount of computation.

Assuming that $A(k)$ is a filtering function of an $M$-tap LPF in the frequency domain based on Time Index 0, $e^{-j\frac{\pi}{2}lk} A(k)$ becomes a bandpass filtering function based on a time delay value $\frac{N}{4}l$. According to an exemplary implementation, the modulation term $e^{-j\frac{\pi}{2}lk} \in \{1,-j,-1,j\}$ is simply implemented by sign conversion of the real or imaginary part.

According to an exemplary implementation, bandpass-filtered signals for the filtering coefficient $A(k)$ associated with the cyclic shift value of 0 and the filtering coefficient $e^{-j\frac{\pi}{2}lk} A(k)$ associated with the cyclic shift value of $N/2$ are defined by Equations (10) and (11).

$$z_{p,0}(k) = \hat{y}_p(k) \otimes_N A(k) = A(0)\hat{y}_p((k)_N) + A(1)\hat{y}_p((k-1)_N) + ... + A(M)\hat{y}_p((k-M)_N)$$

$$\text{Equation (10)}$$

$$z_{p,2}(k) = \hat{y}_p(k) \otimes_N [e^{-j\frac{\pi}{2}lk} A(k)] = \hat{y}_p(k) \otimes_N [(-1)^k A(k)]$$
$$= A(0)\hat{y}_p((k)_N) - A(1)\hat{y}_p((k-1)_N) + A(2)\hat{y}_p((k-2)_N) - A(3)\hat{y}_p((k-3)_N). + ..$$

$$\text{Equation (11)}$$

In Equations (10) and (11), $z_{p,0}(k)$ and $z_{p,2}(k)$ denote a filtered signal mapped to $A(k)$ and a filtered signal mapped to $e^{-j\frac{\pi}{2}lk} A(k)$, respectively. A subscript N denotes a FFT size, that is, the number of subcarriers. A multiplication operation is commonly performed between the terms $A(r)\tilde{y}_p((k-r)_N)$, i.e., $A(0)\hat{y}_p((k)_N), A(1)\hat{y}_p((k-1)_N)$.... When sign conversion and addition operations are suitably performed for real and imaginary parts of a signal multiplied by the PN code, the filtered signal mapped to $e^{-j\frac{\pi}{2}lk}A(k)$ can be computed without an additional multiplication operation.

According to an exemplary implementation, the energy of the BS is distributed in a specific time domain using specific cyclic delay values in FIG. 4B such that the cell search can be easily performed.

When even subcarriers are used as illustrated in FIG. 4C, a preamble is designed using cyclic shift values of multiples of $N / 8$. When the preamble only using the even subcarriers is used for frequency offset and frame synchronization, a received signal is cyclically repeated in the time domain in a period of $N/2$. Accordingly, Equation (6) can be rewritten as Equation (12).

$$\tilde{y}_0[n] = IDFT[\hat{y}_0(k)] = 0.5h[(n-ld)_N] + 0.5h[(n-ld-N/2)_N] + \tilde{w}[n]$$

Equation (12)

When cyclic shift values are $ld = 0$ and $ld = N/2$, their PN codes are the same as each other, such that the number of preambles capable of being generated using the cyclic shift values of multiples of $N/4$ is reduced from 4 to 2. However, when cyclic shift values of multiples of $N/8$ are used, four type preambles based on the cyclic shift values 0, $N/8$, $N/4$, and $3N/8$ can be generated. The modulation term of the frequency domain is $e^{j\frac{\pi}{4}qk}$, and requires a multiplication operation for $e^{j\frac{\pi}{4}} = 1/\sqrt{2}(1+j)$ as well as {1,-j,-1,j}. According to an exemplary implementation, a $N/2$ -point IFFT operation is performed on only even subcarriers containing actual information, Equation (13) can be obtained.

$$IDFT[\hat{y}_0(2k)] = h[(n-q(\frac{N}{8}))_{N/2}] + \tilde{w}[n] \qquad \text{Equation (13)}$$

A BPF for processing $\hat{y}_0(2k)$ in the frequency domain in Equation (13) can be expressed by Equation (14).

$$e^{-j\frac{2\pi}{N/2}(\frac{N}{8})qk}A(k) = e^{-j\frac{\pi}{2}qk}A(k) \quad \text{for} \quad k = 0,1,...,N/2-1 \quad \text{and} \quad q = 0,1,2,...,3$$

Equation (14)

When a preamble is generated according to even subcarriers and cyclic shift values of multiples of $N/8$, hardware implementation complexity is simplified. That is, a receiver simplifies hardware complexity for the cell search using one BPF for performing four types of bandpass filtering operations and sign conversion of a real or imaginary number as in case of FIG. 4B.

When the first two OFDM symbols, (i.e., OFDM Symbol 0 and OFDM Symbol 1) are used in one frame as illustrated in FIG. 4D, identical codes are not allocated but individual PN codes and individual cyclic shift values are allocated for the two OFDM symbols. The preamble structure of each OFDM symbol is based on one of FIGS. 4A to 4C. Then, according to an exemplary implementation, $N_{CODE}$ preambles can be generated as shown in Equation (15).

$$P_{CODE0}Q_{CODE0}P_{CODE1}Q_{CODE1} = N_{CODE} \qquad \text{Equation (15)}$$

In Equation (15), $P_{CODE0}$ and $P_{CODE1}$ denote the number of PN codes available in OFDM Symbol 0 and the number of PN codes available in OFDM Symbol 1, respectively. $Q_{CODE0}$ and $Q_{CODE1}$ denote the number of cyclic shift values used in OFDM Symbol 0 and the number of cyclic shift values used in OFDM Symbol 1, respectively.

According to an exemplary implementation, when $P_{CODE0} = P_{CODE1}$ 4 and $Q_{CODE0} = Q_{CODE1} = 8$, the BS generates a preamble using one of a total of 16 PN codes. The mobile terminal performs the cell search using the total of 16 PN codes. According to an exemplary implementation, an amount of computation for the cell search is reduced to 1/70 of the conventional computation amount using 1,024 PN codes. There is an advantage in that a hardware size is reduced because a memory of the mobile terminal stores only a maximum of 8 PN codes.

Assuming that a search error at the time of using 2 PN codes is $P_e$, a search error at the time of performing a cell search test for a total of $N_{CODE}$ cells using one PN code is defined by Equation (16).

$$1-(1-p_e)^{N_{CODE}-1} \approx (N_{CODE}-1)p_e \qquad \text{Equation (16)}$$

On the other hand, an error in the case where two symbols use $N_{CODE0}$ individual PN codes and $N_{CODE1}$ individual PN codes, respectively, as illustrated in FIG. 4D is defined by Equation (17).

$$1-(1-p_e)^{N_{CODE0}+N_{CODE0}-2} \approx (N_{CODE0}+N_{CODE1}-2)p_e \qquad \text{Equation (17)}$$

Accordingly, a cell search error according to the preamble structure of FIG. 4D is reduced to $(N_{CODE0} + N_{CODE1}-2)/(N_{CODE}-1)$ . For example, when $N_{CODE} = 1024$ and $N_{CODE0} = N_{CODE1}= 32$, the cell search error can be reduced to about 1/34.

FIG. 5 is a block diagram illustrating a structure of a transmitter for generating a preamble in accordance with an exemplary embodiment of the present invention.

Referring to FIG. 5, a PN code generator 400 generates one of $P_{CODE}$ PN codes. According to an exemplary implementation, the PN code generator 400 allocates one of the $P_{CODE}$ PN codes designated by considering the total number of cells to be distinguished and the number of cyclic shift values.

An IFFT unit 402 OFDM-modulates the PN code and outputs N OFDM samples. A cyclic shifter 404 cyclically shifts the OFDM samples by one value of predetermined $Q_{CODE}$ number of cyclic shift values in the time domain. A cyclic prefix (CP) inserter 406 sets a CP generated from the cyclically shifted OFDM samples as a guard interval (GI) and then generates an OFDM symbol. According to an exemplary implementation, the GI is not generated from OFDM samples in the same fixed position but is generated from OFDM samples cyclically shifted by a predetermined value in the time domain. A parallel-to-serial converter (PSC) 408 converts the OFDM symbol in a serial fashion and then outputs the converted OFDM symbol. A radio frequency (RF) unit 410 converts the OFDM symbol to an OFDM signal of an RF band consisting of $N$ subcarriers and then transmits the OFDM signal.

FIG. 6A is a block diagram illustrating a structure of a receiver for performing a cell search in accordance with a first embodiment of the present invention. Here, the receiver uses the preamble structure of FIG. 4A using $P_{CODE}$ PN codes and $Q_{CODE}$ cyclic shift values.

Referring to FIG. 6A, an RF unit 412 receives an OFDM signal of an RF band sent from the transmitter through a multipath. A CP remover/serial-to-parallel converter (SPC) 414 detects, from the OFDM signal, an OFDM symbol from which a CP has been removed and then outputs OFDM samples in a parallel fashion. A fast Fourier transform (FFT) processor 416 transforms the OFDM samples according to FFT and OFDM-demodulates the transformed OFDM samples. According to an exemplary implementation, the OFDM samples of the frequency domain are OFDM-demodulated into a time domain signal, such that the time domain signal is output. The time domain signal is provided to a preamble detector 426. The preamble detector 426 is configured by a multiplier 419, a PN code generator 418, an IFFT unit/energy measurer 420, and a maximum selector (or Maximum selector) 422. The operation of each component is as follows.

The multiplier 419 multiplies the time domain signal by $P_{CODE}$ PN codes generated from the PN code generator 418 and then outputs multiplied signals. The IFFT unit/energy measurer 420 identifies an energy distribution of a time domain for the multiplied signals. According to an exemplary implementation, the IFFT unit/energy measurer 420 transforms the multiplied signals according to an IFFT operation, and outputs energy values $S_{p,0}, S_{p,1},..., S_{p,\text{QCODE-}1}$ of the PN codes. The maximum selector 422 identifies an energy distribution and identifies a cyclic shift value of a matched PN code, because energies of the multiplied signals are concentrated in specific time domains according to cyclic shift values. Accordingly, the maximum selector 422 detects an energy value $S_{p,\hat{q}(p)}$ concentrated in a specific time domain and its cyclic shift value $\hat{q}(p)$. A cell detector(or Cell Searcher-2) 424 sets a cell mapped to the detected cyclic shift value as a cell most suitable for communicating with the mobile terminal.

FIG. 6B is a block diagram illustrating a structure of a receiver for performing a cell search in accordance with an exemplary implementation of an embodiment of the present invention. According to an exemplary implementation, the receiver uses the preamble structure of FIG. 4B or 4C using $N_{CODE}$ /4 PN codes and four cyclic shift values.

Referring to FIG. 6B, an RF unit 500 receives an OFDM signal of an RF band sent from the transmitter through a multipath. A CP remover/SPC 502 detects, from the OFDM signal, an OFDM symbol from which a CP has been removed and then outputs OFDM samples in the parallel fashion. An FFT unit 504 transforms the OFDM samples according to FFT and OFDM-demodulates the transformed OFDM samples. That is, the OFDM samples of the frequency domain are OFDM-demodulated into a time domain signal, such that the time domain signal is output. The time domain signal is provided to a preamble detector 514. The preamble detector 514 is configured by a multiplier 507, a PN code generator 506, a BPF 508, and a maximum selector (or Maximum selector) 510. The operation of each component is as follows.

The multiplier 507 multiplies the time domain signal by $N_{CODE}$ /4 PN codes generated from the PN code generator 506 and then outputs multiplied signals. The BPF 508 performs bandpass-filtering operations based on cyclic shift values *0, N/4, N*/2, and 3 *N* /4 on the multiplied signals. According to an exemplary implementation, the BPF 508 outputs energy values $S_{p,0}$, $S_{p,1}$, $S_{p,2}$, and $S_{p,3}$ for four time domain signals. The maximum selector 510 selects the maximum energy value $S_{p,\hat{q}(p)}$ of energy values of time domains and a cyclic shift value $\hat{q}(p)$ of a PN code mapped thereto. A cell detector (or Cell Searcher-2) 512 sets a cell mapped to the selected cyclic shift value as a cell most suitable for communicating with the mobile terminal.

The mobile terminal as illustrated in FIG. 6B obtains four bandpass-filtered signals using the single BPF 508 as compared with the mobile terminal as illustrated in FIG. 6A. According to an exemplary implementation, the BPF 508 based on a cyclic shift value $\dfrac{N}{4} l$ filters a frequency domain signal based on Time Domain 0. Sign conversion of a real or imaginary part for the filtered signal is performed, such that the cell search is easily performed.

FIG. 7A is a block diagram illustrating a structure of a preamble detector associated with FIG. 6B in accordance with an exemplary embodiment of the present invention. In FIG. 7A, a multiplier 630 corresponds to the multiplier 507 of FIG. 6B, and a comparator 628 corresponds to the maximum selector 510 of FIG. 6B. The remaining components correspond to the BPF 508 of FIG. 6B. The PN code generator 506 of FIG. 6B is omitted in FIG. 7A.

Referring to FIG. 7A, the multiplier 630 multiplies an FFT signal y(k) received through a multipath by one PN code $c_{p,0}(k)$ of $N_{CODE}$ /4 PN codes sequentially output from the PN code generator 506. According to an exemplary implementation, $c_{p,0}(k)$ denotes the *p* -th PN code not cyclically shifted. *M* - tap delay elements 600 to 608 configured by *M* serially connected delay elements receive the multiplied signal, sequentially delays the received signal by *N* /4 or *N* /8, and then outputs the delayed signal.

The multipliers 610 to 618 multiply the multiplied signal and the delayed signals output from the delay elements 600 to 608 by filter coefficients A(0), A(1),..., A(M) and then output result signals of the multiplication. The multipliers 610 to 618 operate as the *M*-tap LPF. The result signals from the multipliers 610 to 618 are provided to four adders 640, 642, 644 and 646 after filter coefficient sets which are different from the A(0), A(1), ... A(M) are applied. For example, when *M* = 3, four filter coefficient sets of (1,1,1,1), *(1,—j,—1,j)*, (1,—1,1,—1), and *(1, j,—1,—j)* mapped to four cyclic shift values of 0, N/4, *N*/2 and 3*N*/4 are used.

According to an exemplary implementation, the result signal from the multiplier 610 is multiplied by (1,1,1,1) respectively and then is output to adders 640, 642, 644, and 646. The result signal from the multiplier 612 is multiplied by *(1,—j,—1, j)* respectively and then is output to the adders 640 to 646. Similarly, each of the result signals from the multipliers 614 to 618 is multiplied by one successively selected among the coefficient sets and then is output to the adders 640 to 646, respectively. Wherein the multiplication of the each of the coefficient sets is achieved by selecting one of real part and imaginary part and/or inverting the selected part, without using any further multipliers.

The adders 640 to 646 sequentially add outputs corresponding to the filter coefficient sets output from the *M* multipliers 610 to 618. Squarer/adders 620 to 626 perform square and addition operations on outputs of the adders 640 to 646 and then obtain energy values $S_{p,0}$, $S_{p,1}$, $S_{p,2}$, and $S_{p,3}$. According to an exemplary implementation, four bandpass-filtered signals are obtained from one multiplied signal. A comparator 628 outputs a cyclic shift value $\hat{q}(p)$ with the maximum energy and the maximum energy value $S_{p,\hat{q}(p)}$ among outputs of the squarer/adders 620 to 626. As described above, a preamble and a cell mapped to the cyclic shift value are searched.

As described above, the preamble detector obtains four bandpass-filtered signals using one BPF to perform the cell search, and detects the cyclic shift value with the maximum energy among the bandpass-filtered signals. According to an exemplary implementation, the preamble detector of FIG. 6B implements the BPF 508 for passing a designated frequency band in place of the N -point IFFT unit 420, thereby reducing hardware complexity. A computation amount for $N_{CODE}$ PN codes is reduced to a computation amount for $N_{CODE}$/4 PN codes, such that the computation amount for the cell search can be reduced.

FIG. 7B is a block diagram illustrating another example of a preamble detector without multipliers ("without mults.") in accordance with an exemplary embodiment of the present invention. In FIG. 7B, a multiplier 730 corresponds to the multiplier 507 of FIG. 6B, and a comparator 728 corresponds to the maximum selector 510 of FIG. 6B. The remaining components correspond to the BPF 508 of FIG. 6B. The PN code generator 506 of FIG. 6B is omitted in FIG. 7B. The multiplied signal from the multiplier 730 and the delayed signals from the delay elements 700 to 708 are provide to four adders 740, 742, 744 and 746 after the above filter coefficient sets are applied.

The squarer/adders 620 to 626 of FIG. 7A perform an operation for squaring a complex number to compute the energy. According to an exemplary implementation, an energy value of $x_r + jy_r$ can be expressed as $x_r^2 + y_r^2$. In this case, the magnitude of the real and imaginary parts can be expressed as $|x_r| + |Y_r|$. In the opposite, the preamble detector of FIG. 7B is provided with absolute value adders 720 to 726 instead of the squarer/adders 620 to 626, and adds absolute values. According to an exemplary implementation, the absolute value adders 720 to 726 add absolute values of real and imaginary parts such that the cell search is performed. The preamble detector of FIG. 7A different from that of FIG. 7B, signs of the real and/or imaginary parts are simply inverted, i.e., a multiplication operation is not required, such that the computation amount for the cell search can be significantly reduced. Therefore, the preamble detector of FIG. 7B removes a multiplication operation in relation to energy estimation for the cell search, such that the cell search can be performed using a small amount of computation.

The above-described preamble structures of FIGS. 4C and 4D can be easily implemented using FIGS. 6A/6B and 7A/7B. For example, the preamble of FIG. 4C is generated by performing an IFFT operation to map an allocated PN code to even subcarriers and performing a cyclic shift using one cyclic shift value of 0, $N/8$, $N/4$, and $3N/8$. The receiver searches a cell by detecting the preamble of FIG. 4C using the structures of FIGS. 6B and 7A/7B. The preamble structure of FIG. 4D is implemented by generating the first OFDM symbol using a PN code and a cyclic shift value and generating the second OFDM symbol, subsequent to the first OFDM symbol, using a different PN code and a different cyclic shift value in the same way that the first OFDM symbol is generated. The first and second OFDM symbols are successively transmitted at the beginning of a data frame. The receiver successively detects the two OFDM symbols and then performs the cell search.

FIG. 8 is a graph illustrating the performance of detecting a preamble in accordance with an exemplary embodiment of the present invention.

FIG. 8 illustrates system performances based on the cell searchers illustrated in FIGS. 6A and 6B. When the cell search is performed using FFT, 16 PN codes, and a cyclic shift value set to 1, the preamble detection performance is indicated by "FFT-based". When the cell search is performed using a BPF, the preamble detection performance is indicated by "LPF-based". From FIG. 8, it can be found that the case of "LPF-based" using the BPF requires a relatively low signal-to-noise ratio (SNR) to obtain a desired preamble detection probability.

According to an exemplary implementation of the present invention, a preamble is designated using different PN codes and different cyclic shift values, and performs a cell search according to the different PN codes and the different cyclic shift values, such that the cell search can be performed using a relatively small amount of computation.

According to an exemplary implementation, the number of available PN codes is reduced and therefore computation complexity according to the cell search is reduced. The cell search is performed while considering only a designated frequency domain, such that hardware is reduced.

According to an exemplary implementation, when the present invention is used in a Telecommunications Technology Association (TTA) wireless broadband internet (WiBro) system, 1,016 detection attempts can be reduced to 16 detection attempts corresponding to about 1/70 of the 1,016 detection attempts and the number of PN codes to be stored at the time of generating a preamble can be reduced to 8.

As is apparent from the above description, certain exemplary implementations of the present invention do not perform a cell search for N pseudo-random noise (PN) codes mapped to all cells, but perform a cell search for P PN codes considered for a cyclic shift, thereby reducing the amount of computation for the cell search. According to an exemplary implementation, the cell search is performing by testing only the P PN codes less than the total number of $N$ PN codes and by distributing only a designated energy domain for the P PN codes in a time domain. A memory of a mobile terminal for storing PN codes to be used for the cell search can be significantly reduced, and a cell search error can be significantly reduced.

Although certain exemplary embodiments of the present invention have been disclosed for illustrative purposes, those skilled in the art will appreciate that various modifications, additions, and substitutions are possible, without departing from the scope of the present invention which is defined by the following claims, along with their full scope of equivalents.

**Claims**

1. A method for transmitting a preamble in an orthogonal frequency division multiple access (OFDMA) system using N subcarriers, the method comprising the steps of:

   generating an allocated pseudo-random noise (PN) code of $P_{CODE}$ PN codes from each cell such that all $N_{CODE}$

cells are identified, where $P_{CODE}$ is less than $N_{CODE}$;

transforming the PN code into N orthogonal frequency division multiplexing (OFDM) samples according to N -point inverse fast Fourier transform (IFFT); cyclically shifting the OFDM samples by an allocated value of $Q_{CODE}$ cyclic shift values, where $N_{CODE}$ is $P_{CODE}$ *$Q_{CODE}$;

inserting a cyclic prefix (CP) for preventing inter-symbol interference into a head end of the cyclically shifted OFDM samples, and generating a first OFDM symbol to be used for a preamble; and

transmitting the first OFDM symbol at a beginning of a data frame through a radio frequency (RF) band.

2. The method of claim 1, wherein the cyclic shift values comprise at least one of 0, $N/4$, $N/2$ and $3N/4$.

3. The method of claim 1, wherein the cyclic shift values comprise at least one of 0, $N/8$, $N/4$, and $3N/8$.

4. The method of claim 3, wherein the transforming step comprises the step of:

    mapping the PN code to even subcarriers.

5. The method of claim 1, further comprising the steps of:

    generating a second OFDM symbol with a PN code and a cyclic shift value different from those of the first OFDM symbol, the first and second OFDM symbols configuring the preamble; and
    transmitting the second OFDM symbol subsequent to the first OFDM symbol.

6. An apparatus for transmitting a preamble in an orthogonal frequency division multiple access (OFDMA) system using N subcarriers, the apparatus comprising:

    a pseudo-random noise (PN) code generator for generating an allocated PN code of $P_{CODE}$ PN codes from each cell such that all $N_{CODE}$ cells are identified,

    where $P_{CODE}$ is less than $N_{CODE}$;
    an inverse fast Fourier transform (IFFT) unit for transforming the PN code into $N$ orthogonal frequency division multiplexing (OFDM) samples according to $N$ -point IFFT;
    a cyclic shifter for cyclically shifting the OFDM samples by an allocated value of $Q_{CODE}$ cyclic shift values, where $N_{CODE}$ is $P_{CODE}$ * $Q_{CODE}$;
    a cyclic prefix (CP) inserter for inserting a CP for preventing inter-symbol interference into a head end of the cyclically shifted OFDM samples, and generating a first OFDM symbol to be used for a preamble; and
    a radio frequency (RF) unit for transmitting the first OFDM symbol at a beginning of a data frame through an RF band.

7. The apparatus of claim 6, wherein the cyclic shift values comprise at least one of 0, $N/4$, $N/2$ and $3N/4$.

8. The apparatus of claim 6, wherein the cyclic shift values comprise at least one of 0, $N/8$, $N/4$, and $3N/8$.

9. The apparatus of claim 8, wherein the IFFT unit maps the PN code to even subcarriers.

10. The apparatus of claim 6, wherein the PN code generator, the IFFT unit, the cyclic shifter, and the CP inserter generate a second OFDM symbol using a PN code and a cyclic shift value different from those of the first OFDM symbol, the first and second OFDM symbols configuring the preamble, and
    wherein the RF unit transmits the second OFDM symbol subsequent to the first OFDM symbol.

11. A method for receiving a preamble in an orthogonal frequency division multiple access (OFDMA) system using $N$ subcarriers, the method comprising the steps of:

    receiving an orthogonal frequency division multiplexing (OFDM) signal comprising at least one OFDM symbol used for a preamble through the subcarriers;
    removing a cyclic prefix (CP) for preventing inter-symbol interference from the received OFDM signal, and detecting $N$ OFDM samples;
    transforming the $N$ OFDM samples into a frequency domain signal according to $N$ -point fast Fourier transform (FFT);
    multiplying the frequency domain signal by $P_{CODE}$ pseudo-random noise (PN) codes for identifying all $N_{CODE}$

cells, determining a time domain in which energy of each of multiplied signals is concentrated, and detecting a cyclic shift value of a PN code applied to each OFDM symbol, wherein the cyclic shift value is one of $Q_{CODE}$ cyclic shift values and $N_{CODE}$ is $P_{CODE} {}^{*}Q_{CODE}$; and
searching a cell mapped to the detected cyclic shift value of the PN code.

**12.** The method of claim 11, wherein the detecting step comprises the steps of:

transforming the multiplied signals into time domain signals according to inverse fast Fourier transform (IFFT) and measuring time domain-by-time domain energy values of the time domain signals; and
selecting the cyclic shift value mapped to a time domain with a maximum energy value of the measured energy values.

**13.** The method of claim 11, wherein the cyclic shift values comprise at least one of 0, $N/4$, $N/2$ and $3N/4$.

**14.** The method of claim 12, wherein the selecting step comprises the steps of:

bandpass-filtering the multiplied signals according to pass bands based on cyclic shift values of 0, $N/4$, $N/2$ and $3N/4$;
measuring energy values of the bandpass-filtered signals; and
selecting the cyclic shift value associated with a pass band comprising the maximum energy value of the measured energy values.

**15.** The method of claim 11, wherein the cyclic shift values comprise at least one of 0, $N/8$, $N/4$, and $3N/8$.

**16.** The method of claim 15, wherein the transforming step comprises the steps of:

detecting the OFDM samples from even subcarriers of the subcarriers.

**17.** The method of claim 16, wherein the detecting step comprises the steps of:

bandpass-filtering the multiplied signals according to pass bands based on the cyclic shift values of 0, $N/8$, $N/4$, and $3N/8$;
measuring energy values of the bandpass-filtered signals; and
selecting the cyclic shift value associated with a pass band comprising the maximum energy value of the measured energy values.

**18.** The method of claim 11, wherein the preamble comprises two successive OFDM symbols with different PN codes and different cyclic shift values.

**19.** An apparatus for receiving a preamble in an orthogonal frequency division multiple access (OFDMA) system using N subcarriers, the apparatus comprising:

a radio frequency (RF) unit for receiving an orthogonal frequency division multiplexing (OFDM) signal comprising at least one OFDM symbol used for a preamble through the subcarriers;
a cyclic prefix (CP) remover for removing a CP for preventing inter-symbol interference from the received OFDM signal, and detecting $N$ OFDM samples; a fast Fourier transform (FFT) processor for transforming the N OFDM samples into a frequency domain signal according to $N$-point FFT;
a preamble detector for multiplying the frequency domain signal by $P_{CODE}$ pseudo-random noise (PN) codes for identifying all $N_{CODE}$ cells, determining a time domain in which energy of each of multiplied signals is concentrated, and detecting a cyclic shift value of a PN code applied to each OFDM symbol, wherein the cyclic shift value is one of $Q_{CODE}$ cyclic shift values and $N_{CODE}$ is $P_{CODE} {}^{*} Q_{CODE}$; and
a cell detector for searching a cell mapped to the detected cyclic shift value of the PN code.

**20.** The apparatus of claim 19, wherein the preamble detector comprises:

a PN code generator for sequentially generating the $P_{CODE}$. PN codes;
a multiplier for multiplying the frequency domain signal by the PN codes;
an inverse fast Fourier transform (IFFT) unit/energy measurer for transforming the multiplied signals into time domain signals according to IFFT and measuring time domain-by-time domain energy values of the time domain signals; and

a maximum selector for selecting the cyclic shift value mapped to a time domain with a maximum energy value of the measured energy values.

**21.** The apparatus of claim 19, wherein the cyclic shift values comprise at least one of 0, $N/4$, $N/2$ and $3N/4$.

**22.** The apparatus of claim 21, wherein the preamble detector comprises:

> a PN code generator for sequentially generating the $P_{CODE}$ PN codes;
> a multiplier for multiplying the frequency domain signal by the PN codes;
> a bandpass filter for bandpass-filtering the multiplied signals according to pass bands based on the cyclic shift values of 0, $N/4$, $N/2$ and $3N/4$ , and
> outputting energy values of the bandpass-filtered signals; and
> a maximum selector for selecting the cyclic shift value associated with a pass band comprising a maximum energy value of the output energy values.

**23.** The apparatus of claim 19, wherein the cyclic shift values comprise at least one of 0, $N/8$, $N/4$, and $3N/8$.

**24.** The apparatus of claim 23, wherein the FFT unit detects the OFDM samples from even subcarriers of the subcarriers.

**25.** The apparatus of claim 24, wherein the preamble detector comprises:

> a PN code generator for sequentially generating the $P_{CODE}$ PN codes;
> a multiplier for multiplying the frequency domain signal by the PN codes;
> a bandpass filter for bandpass-filtering the multiplied signals according to pass bands based on the cyclic shift values of 0, $N/8$, $N/4$, and $3N/8$, and
> outputting energy values of the bandpass-filtered signals; and
> a maximum selector for selecting the cyclic shift value associated with a pass band comprising a maximum energy value of the output energy values.

**26.** The apparatus of claim 25, wherein the bandpass filter comprises:

> $M$ serially connected delay elements for receiving and sequentially delaying the multiplied signal;
> multipliers for receiving the multiplied signal and delayed signals output from the delay elements and multiplying the signals by filtering coefficients of $(1,1,1,1)$, $(1,-j,-1,j)$, $(1,-1,1,-1)$, and $(1, j,-1,-j)$;
> adders for adding multiplied signals output from the multipliers according to the filtering coefficients; and
> energy calculators for computing energy values of the added signals.

**27.** The apparatus of claim 19, wherein the preamble comprises two successive OFDM symbols with different PN codes and different cyclic shift values.

| CP | PN Code from PRBS |
|----|-------------------|

# FIG.1A

| CP | PN Code with Low PAR |
|----|----------------------|

# FIG.1B

| CP | Code A from $N_{CODE}$ | CP | Code A from $N_{CODE}$ |
|----|------------------------|----|------------------------|

# FIG.1C

EP 1 657 872 A2

| 200 | 202 | 204 | 206 | 208 |
|---|---|---|---|---|
| PN CODE GENERATOR $c_m(k)$ | IFFT UNIT | CP INSERTER | PSC | RF UNIT |

$m=0, 1, ..., N_{CODE}-1$

→ TRANSMITTING

# FIG.2

$$\hat{m} \leftarrow \boxed{\begin{array}{c}\text{CELL}\\\text{DETECTOR}\\S_m\end{array}} \xleftarrow{S_m} \boxed{\begin{array}{c}\text{IFFT}\\\text{UNIT}\\\text{OR LPF}\end{array}} \leftarrow \otimes \leftarrow \boxed{\begin{array}{c}\text{FFT}\\\text{UNIT}\end{array}} \leftarrow \boxed{\begin{array}{c}\text{CP}\\\text{REMOVER}\\\text{/SPC}\end{array}} \leftarrow \boxed{\begin{array}{c}\text{RF}\\\text{UNIT}\end{array}} \leftarrow \text{RECEIVING}$$

220  218  215  222  214  212  210

PN CODE GENERATOR $c_m(k)$  216

$m = 0, 1, \ldots, N_{CODE}-1$

FIG.3

EP 1 657 872 A2

| CP | Code A from ($P_{CODE}$, $Q_{CODE}$) |
|----|----|

# FIG.4A

| CP | Code A from ($N_{CODE}/4,4$) |
|----|----|

# FIG.4B

| CP | Code A (Even Subcarriers)  from $N_{CODE}/4$ <br> CYCLIC SHIFT:0, N/8, N/4, 3N/8 |
|----|-----------------------------------------------|

# FIG.4C

| CP | Code A from ($P_{CODE0}$ ,$Q_{CODE0}$) | CP | Code B from ($P_{CODE1}$ ,$Q_{CODE1}$) |
|----|----------------------------------------|----|----------------------------------------|

# FIG.4D

FIG.5

424    422    420

CELL DETECTOR $S_{p,\hat{q}(p)}$    MAXIMUM SELECTOR    IFFT UNIT/ ENERGY MEASURER

$(\hat{p},\hat{q}(\hat{p}))$

$\hat{q}(p)$

$S_{p,0}$
$S_{p,1}$
$\vdots$
$S_{p,Q_{CODE}-1}$

$S_{p,\hat{q}(p)}$

419

416    414    412

FFT UNIT    CP REMOVER /SPC    RF UNIT    RECEIVING

418

PN CODE GENERATOR $c_{p,0}(k)$

$p=0, 1, ..., P_{CODE}-1$

FIG.6A

EP 1 657 872 A2

FIG.6B

EP 1 657 872 A2

FIG.7A

FIG.7B

EP 1 657 872 A2

FIG.8